(19)

Europäisches
Patentamt
European
Patent Office
Office européen
des brevets

(11)  EP 3 141 291 A1

(12)  **EUROPEAN PATENT APPLICATION**

(43) Date of publication:
    **15.03.2017 Bulletin 2017/11**

(21) Application number: **15306405.0**

(22) Date of filing: **14.09.2015**

(51) Int Cl.:
    *A63F 13/426* (2014.01)      *A63F 13/2145* (2014.01)
    *A63F 13/218* (2014.01)      *A63F 13/57* (2014.01)
    *G06T 19/20* (2011.01)

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**
    Designated Validation States:
    **MA**

(71) Applicant: **Thomson Licensing
    92130 Issy-les-Moulineaux (FR)**

(72) Inventors:
    • FLEUREAU, Julien
      35576 CESSON-SEVIGNE (FR)
    • GUILLOTEL, Philippe
      35576 CESSON-SEVIGNE (FR)
    • LEFEVRE, Yoan
      35576 CESSON-SEVIGNE (FR)

(74) Representative: **Huchet, Anne
    TECHNICOLOR
    1-5, rue Jeanne d'Arc
    92130 Issy-les-Moulineaux (FR)**

(54)  **METHODS AND APPARATUS OF COMPOSING AN IMAGE OF A TEXTURED MATERIAL DISTORTED WHEN RUBBING A TOUCH SURFACE**

(57)    The present disclosure relates to methods and apparatus for composing an image (10) representative of a textured material when distorted by a rubbing contact (11) on a touch surface. To compose a realistic and immersive image of a textured material, the method comprises obtaining a 3D model of the textured material and a viscoelasticity model (31, 32) of the material, detecting a contact on the touch surface, computing a distorted version of the 3D model (40) and composing an image representative of the distorted version of the 3D model.

Figure 3

**Description**

**1. Technical field**

The present disclosure relates to visual feedback, in particular touching and rubbing a touch surface, for example when the touch surface is a touch screen such as a tablet or a smartphone.

**2. Background**

Tablets and smartphones allow users to use their sense of touch to interact with media content such as video and pictures. For example, a user may "feel" the texture or the roughness of an image when he/she is touching a device by the means of haptic effects such as vibrations generated by actuators embedded in the end-user devices or roughness variations using dedicated "smart surfaces" (see, for example, *"Geometrical optimization of an ultrasonic tactile plate for surface texture rendering"* by Peter Sergeant, Frédéric Giraud and Betty Lemaire-Semail in 2010).

Pseudo-haptic techniques allow a user to indirectly feel the texture or the surface embossment of an image when the user does not directly interact with their finger but rather by a device such as a mouse. Pseudo-haptic methods introduce a discrepancy between the motion of the handled device and the position of the cursor on the displayed image (see *"Simulating haptic feedback using vision: A survey of research and applications of pseudo-haptic feedback"* by Anatole Lécuyer in 2009).

To increase the quality of the feedback when a user touches the screen, it has been proposed to distort the image by simulating the distortion of the material which could occur during a real interaction. A radial distortion is applied by translating the pixels of the image toward the current contact point. In addition, 2D shadows are added over the resulting image. This approach is known to be specific to a punctual contact (such as a mouse click) and addresses the case of a static touch, i.e. when the user is interacting with a static position of the texture.

**3. Summary**

The purpose of the present disclosure is to overcome at least one of the disadvantages of the background. The present disclosure relates to a method of composing an image representative of a texture, the method comprising:

- Obtaining a 3D model and a distortion behaviour model of a material associated with said texture,
- Receiving parameters representative of a contact between at least one object and the touch surface,
- Computing a distorted version of the 3D model following the distortion behaviour model according to at least one parameter of said contact,
- Composing said image according to the distorted version of the 3D model.

According to a particular characteristic, said parameters of the contact comprise a duration value, said duration value being used to compute a pressure value for the contact, the longer the contact, the higher the pressure.

Advantageously, the distortion behaviour model is based on a viscoelasticity model of the material.

According to a specific characteristic, said parameters of the contact comprise information representative of a touch area and the distortion behaviour model takes said area information into account to compute the distorted version of the 3D model of the material.

Advantageously, a parameter of pressure varies over the touch area.

According to a particular characteristic, a position and an orientation of the virtual camera and of at least one light used for composing the image varies over the time.

According to a specific characteristic, the touch surface is a touch screen, the method further comprising displaying the composed image on the touch screen.

The present disclosure also relates to a device configured for composing an image representative of a texture, the device comprising:

- Means for obtaining a 3D model and a distortion behaviour model of a material associated with said texture,
- Means for receiving parameters representative of a contact of at least one object on the touch surface,
- Means for computing a distorted version of the 3D model following the distortion behaviour model according to at least one parameter of said contact,
- Means for composing said image according to the distorted version of the 3D model.

The present disclosure also relates to a device configured for composing an image representative of a textured material, the device comprising at least one processor configured to:

- Obtain a 3D model and a distortion behaviour model of the textured material,
- Receive parameters representative of a contact of at least one object on the touch surface,
- Compute a distorted version of the 3D model following the distortion behaviour model according to at least one parameter of said contact,
- Compose said image according to the distorted version of the 3D model.

Optionally, the device further comprises a transmitter transmitting said image to a display device.

The present disclosure also relates to a computer program product comprising instructions of program code for executing, by at least one processor, the abovementioned method of composing an image representative of a texture, when the program is executed on a computer.

The present disclosure also relates to a (non-transitory) processor readable medium having stored therein instructions for causing a processor to perform at least the abovementioned method of composing an image representative of a texture.

## 4. List of figures

The present disclosure will be better understood, and other specific features and advantages will emerge upon reading the following description, the description making reference to the annexed drawings wherein:

- **Figure 1** shows an example of an image representative of a texture associated with a material, according to a specific embodiment of the present principles;
- **Figure 2** diagrammatically shows a surface of a material, such as the one of figure 1, distorted as it could occur when pressed by an object, according to a specific embodiment of the present principles;
- **Figure 3** diagrammatically shows a surface of a material such as the one of figure 1, distorted as it could occur when rubbed by an object, according to a specific embodiment of the present principles;
- **Figure 4** diagrammatically shows that the composed image of figure 1 is representative of the 3D model, distorted as shown on figures 2 and 3, as captured by a virtual camera, according to a specific embodiment of the present principles;
- **Figure 5** diagrammatically shows a structure of a system configured to compose an image representative of a texture distorted as it could occur when a material associated with the texture is touched and/or rubbed by an object, such as the one of figure 1, according to the principles of figure 4, according to a specific embodiment of the present principles;
- **Figure 6** shows a method of composing an image representative of a texture distorted as it could occur when a material associated with the texture is touched and/or rubbed by an object, such as the one of figure 1, implemented in a processing device of figure 5, according to a specific embodiment of the present principles;

## 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It is understood that subject matter embodiments can be practiced without these specific details.

As used herein, a "texture" is an image that is representative of an aspect of a surface of a material. The material may have a shape in three dimensions (3D), for example flat or with bumps and/or holes, represented by a 3D model. A material is associated with a distortion behaviour model. This model describes the distortions that the shape of the material suffers from when pressed and/or rubbed by an object. A real material has viscosity and elasticity. The distortion behaviour model of a virtual material may be represented by a set of equations which may simulate the viscoelasticity properties of an equivalent, real-world material.

The present principles will be described in reference to a particular example of a method of composing an image representative of a texture when the user is touching and/or rubbing a touch surface. This distortion is realistic in regards to the distortion of the shape of the material that the texture is associated with if pressed and/or rubbed by such a contact with an object. Hereafter, a texture associated with a material is named textured material.

The textured material is associated with a 3D model that is representative of the shape of its surface. For instance, a sponge has an embossed surface, a velvet cushion is slightly rounded and a wooden table is flat. The 3D model is associated with a distortion behaviour model that is representative of the distortion of the surface of the material in function of contact parameters, such as pressure and area. For example, when pressed on, the surface of a sponge is significantly distorted, a velvet cushion is distorted following a different model and a wooden table keeps its shape. The distortion behaviour model may be based on viscoelasticity properties of the material. When receiving the parameters of a contact, the present principles use the distortion behaviour model to distort the 3D model. A virtual camera may capture and generate an image of the distorted version of the 3D model lighted by at least one virtual light source. The composed image has the advantage to be realistically representative of the textured material distorted as it would occur during a real interaction. In addition, viscoelasticity properties of the distortion behaviour model ensure the quality of the composed image when the user is rubbing the touch surface by introducing some inertia in the distortion of the 3D model.

A touch surface may map an image. Touching this touch surface at a point corresponds to touching the image of the texture at a mapped point. In the following of this document, the expression "a material distorted by a contact on a touch surface" will designate "a material distorted as it could occur when an object is in contact with the material, the contact having parameters as detected by a touch surface and/or computed to simulate a real interaction".

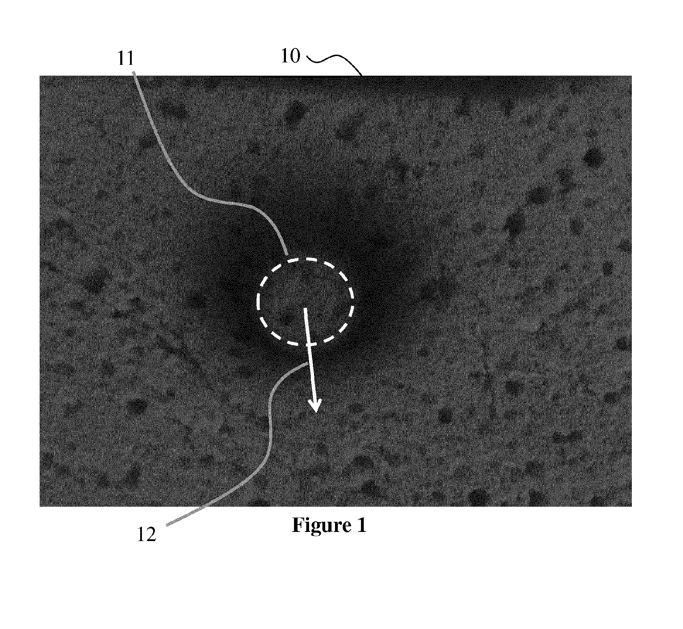

**Figure 1** shows an example of an image (10) representative of a textured material, here a sponge, distorted by a contact on a touch surface. In this example, a user may interact with the touch surface with an object such as his/her finger(s) or a stylus (e.g. a pen). The contact of the object has a area parameter (11), called "touch area", corresponding to the amount of surface that the object covers on the touch surface. Depending on the embodiment, this touch area is detected by the touch surface or is simulated, for instance, as a disk centred around a punctual detected position. This latter embodiment may be applied when a user interacts with a mouse device. The radius of the disk is set to simulate the size of a contact with a physical object such as a finger or a stylus. In a variant, the shape of the simulated area is an ellipse or a rectangle. A pressure parameter may be associated with the contact area. According to a variant, the pressure parameter varies over the contact area. Depending on the embodiment, this variation is detected by the touch surface or is simulated over the area. The contact has a displacement parameter (12) comprising a direction and a speed. The displacement parameter is advantageously represented as a two dimensional (2D vector), the length of the vector being representative of the speed of the displacement. In one of the variants in which the pressure variation is simulated, the displacement is taken into account to simulate a variation of the pressure in function of the direction and the speed of the displacement parameter. Such a definition of the contact has two advantages. First, it allows a texture distortion that is more realistic than a point centred distortion as it applies on an area. Second, its allows a shadow rendering more realistic than image processing methods as shadows correspond to the 3D distortion of the material over the distorted area.

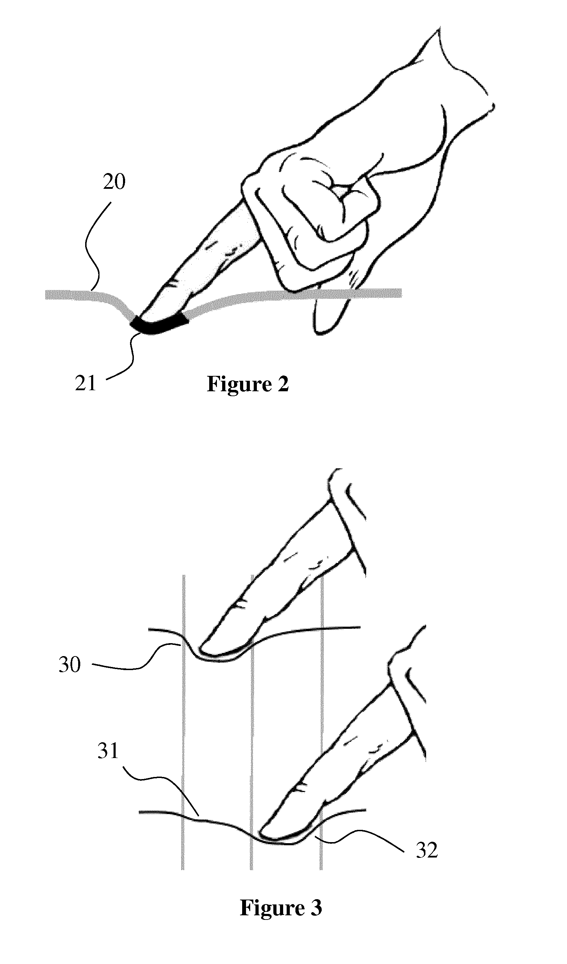

**Figure 2** illustrates an exemplary diagram of a surface of a material (20) distorted according to the pressure of an object (11) in contact with the touch surface. In particular, Figure 2 illustrates an example of a finger in contact with the material (20) covering a non-punctual touch area (21). A static contact is a contact for which the speed component of the displacement parameter is set to zero. When a static distortion is applied to a material, the distortion is divided into two components. A first distortion is applied at the touch area and a second distortion is applied to the region around the touch area.

The first distortion represents the distortion of the material over the surface of the object in contact with the material. The touch area (21) depends on the object in contact with the touch surface such as a thumb, an index finger, a little finger, a thin stylus or a big stylus. A 3D model is associated with the material. The material is mainly disposed along a reference plane (x,y). For the sake of clarity, let us consider a first variant, in which the touch area (11) is a disk of radius R centered around a point of contact detected by the touch surface. The pressure is simulated according to the duration parameter of the contact. The first pressure linearly increases over the time, for a duration going from zero to $T_{max}$. The pressure is considered for its vertical component, on the z-axis of the 3D model. In this first variant, the pressure is equally applied on the whole disk of the touch area. The 3D model is distorted according to the associated 3D distortion behaviour model along the z-axis according to an equation such as [E1] for example.

$$[E1]: \quad z(d,t) = \frac{e^{\frac{5(d-R)}{R}} - 1}{10} - t \quad for \ d \in [0,R]$$

In equation [E1], d is the distance to the center of the disk of the touch area and $t$, the duration normalized on the interval $[0, T_{max}]$.

The second distortion represents the distortion implied around the touch area. In the first variant, the second distortion is applied on ring from radius R to a radius $M$ that is set according to the viscoelasticity properties of the material. The 3D model is distorted along its z-axis according to an equation such as [E2], for example.

$$[E2]: \quad z(d,t) = -t.e^{\frac{5(R-d)}{t.M}} \quad for \ d \in [R,M]$$

In equation [E2], d is the distance to the center of the disk of the touch area and $t$, the duration normalized on the interval $[0, Tm_{ax}]$. This set of equations has the advantage to preserve the C° continuity distortion between the two considered regions as well as the presence of a plateau associated to the touch area and a radial decrease of the distortion around the touch area.

In other variants, the touch surface detects the shape of the touch area (21) that is different from a disk, and in some other variants, the touch surface detects the pressure varying over the touch area.

**Figure 3** illustrates an example of a diagram illustrating a surface of a material (30, 31) distorted according to the pressure of an object (32) in rubbing contact with the touch surface. In particular, Figure 3 illustrates an example of a finger in a rubbing contact with the touch surface. A rubbing contact has a duration parameter greater than zero and a non-null displacement parameter. In other words, the touch area is moving over the touch surface. In an embodiment, the previous static model is considered as a normalized force signal (and not anymore as the normalized distortion itself) along the z-axis and the vertical force signal is set as an input of a purely vertical viscoelasticity model which is in charge of making the successive contacts of the user coherent on the whole image texture. The viscoelasticity model has the advantage of allowing the incorporation of parameters for texture properties such as stiffness and viscosity with low computational loads while preserving the contact model properties (plateau, radial decrease). In the first variant, the distortion behaviour model is, for instance, defined by the equation [E3], equivalent after a discretization step to the equation [E4].

$$[E3] : P(x, y, t) = K. E(x, y, t) + v.\frac{dE(x,y,t)}{dt}$$

$$[E4] : E_z[x, y, t] = \frac{dt.P_z[x,y,t]+v.E_z[x,y,t-1]}{dt.K+v}$$

Where:

- $P_z[x,y,t]$ is the force applied at the time $t$ of the interaction on the pixel located at $(x,y)$ on the image and computed with the static model distortion equations [E1] and [E2]. At a time $t$, $P_z[x,y,t]$ is maximal under the contact surface,
- $E_z[x,y,t]$ is the effective distortion along the z-axis at the time $t$ of the pixel located at $(x,y)$ on the image.

In one example, $E_z[x,y,t]$ does not only depend on the current force $P_z[x,y,t]$ but also on the previous displacement $E_z[x,y,t-1]$. In steady state or for a constant pressure $P_z[x,y,t] = Po,$ the displacement $E_z[x,y,t]$ converges to the value $\frac{P_0}{K}$ that is proportional to the force Po. On the other hand, for transient state, such as when the input force increases or decreases, the displacement reaches its steady state value within a time defined by the viscosity parameter $v$. The higher the value $K$, the lower the final distortion (i.e. the stiffer is the texture) and the lower v, the faster the texture reaches its steady state (i.e. the more elastic is the texture). Hence, the resulting distortion ensures the time consistency of the distortion as well as the integration of the user external interaction.

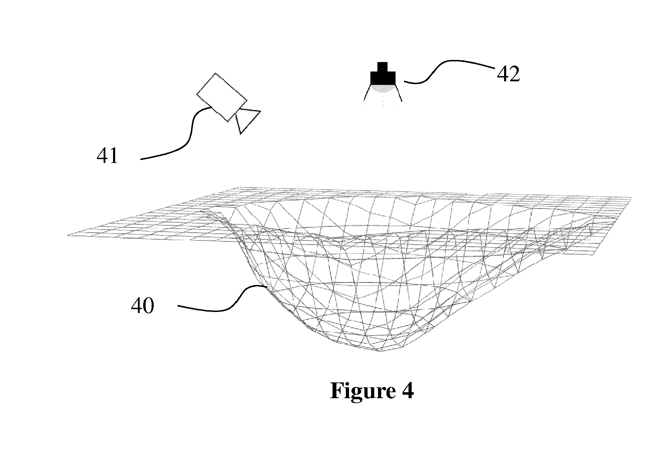

**Figure 4** diagrammatically shows that the composed image is representative of the distorted 3D model (40) as captured by a virtual camera (41). In a variant, the position and the orientation of the virtual camera (41) are set at an initialization phase of the present method. For example, the position and orientation of the virtual camera (41) may be set at an orthogonal position according to the surface of the textured material or, for example, with an angle set at 45°according to the surface of the textured material. In another variant, the position and the orientation of the virtual camera (41) vary, for example, to follow the position and the orientation of the gaze of the user over a display screen on which the composed image is displayed. The detection of the gaze of the user is ensured by dedicated devices and systems. This variant has the advantage to provide a realistic and immersive version of the composed image.

In a particular embodiment, the 3D model is lighted by a unique directional virtual light source (42). The position and the orientation of the light source (42) is set at an initialization phase of the present method. For example, the position and orientation of the light source (42) may be set an orthogonal position according to the surface of the textured material or, for example, with an angle set at 45° according to the surface of the textured material. According to another embodiment, the 3D scene contains two or more light sources. Light sources are for instance directional light or point light or ambient light or spot light. The different light sources of the 3D scene may be of different types. In a variant, The position and the orientation of each light source (42) may vary, for example, to follow the inclination of the display device on which the composed image is rendered. The detection of the inclination is ensured by the display device according to a dedicated method. This variant has the advantage of providing realistic and immersive shadows on the composed image.

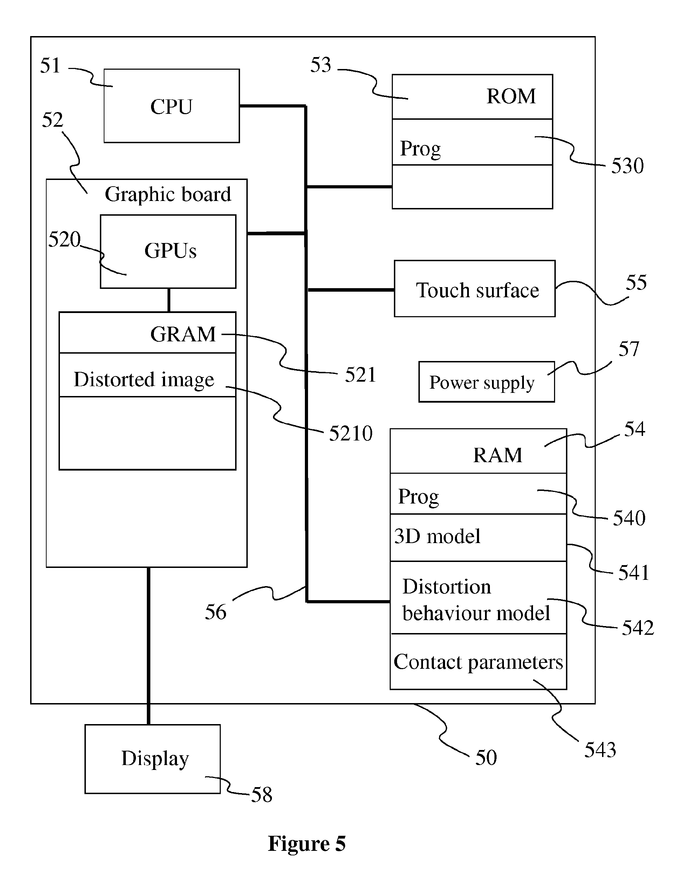

**Figure 5** shows a hardware embodiment of an apparatus (50) configured to compose an image representative of a textured material distorted by a contact on a touch surface. In this example, the device (50) comprises the following elements, connected to each other by a bus (56) of addresses and data that also transports a clock signal:

- a microprocessor (51) (or CPU),
- a graphics card (52) comprising:

  • several Graphical Processor Units (or GPUs) (520),
  • a Graphical Random Access Memory (GRAM) (521),

- a non-volatile memory of ROM (Read Only Memory) type (53),
- a Random Access Memory or RAM (54),
- a Touch Surface (55) and other I/O (Input/Output) devices such as for example a mouse, a webcam, etc. that are not represented on Figure 5, and
- a power source (57).

Advantageously, the device (50) is connected to one or more display devices (58) of display screen type directly to the graphics card (52) to display images calculated in the graphics card. In a particular embodiment, the touch surface (55) is a touch screen and the display(58) is integrated to the device (50).

It is noted that the word "register" used in the description of memories (521), (53) and (54) designates in each of the memories mentioned, both a memory zone of low capacity (some binary data) as well as a memory zone of large capacity (enabling a whole program to be stored or all or part of the data representative of data calculated or to be displayed).

When switched-on, the microprocessor (51) loads and executes the instructions of the program contained in the RAM (54).

The random access memory (54) notably comprises:

- in a register (540), the operating program of the microprocessor (51) responsible for switching on the device (50),
- data (541) representative of the 3D model of the textured material comprising a representation of the geometry of the model and images representative of the texture,
- data (542) representative of the distortion behaviour model of the material, for example as programs,
- data (543) representative of the contact parameters, these data being the result of a detection of a contact on the touch surface or computed by the microprocessor (51) to simulated the touch area or the contact pressure,

According to one particular embodiment, the algorithms implementing the steps of the method specific to the present disclosure and described hereafter are advantageously stored in the memory GRAM (521) of the graphics card (52) associated with the device (50) implementing these steps. When switched on and once the data (541), (542) and (542) are loaded into the RAM (53), the graphic processors (520) of the graphics card (52) load these parameters into the GRAM (521) and execute the instructions of these algorithms in the form of microprograms of "shader" type using HLSL (High Level Shader Language) language or GLSL (OpenGL Shading Language) for example.

The random access memory GRAM (521) notably comprises data representative of an image representative of the textured material distorted by a contact in a register (5210).

According to another variant, a part of the RAM (53) is assigned by the CPU (51) for storage of the algorithms. This variant however causes greater latency time in the composition of an image as the data must be transmitted from the random access memory (53) to the graphics card (52) passing by the bus (56) for which the transmission capacities are generally inferior to those available in the graphics card for transmission of data from the GPUs to the GRAM and vice-versa.

According to another variant, the power supply (57) is external to the device (50).

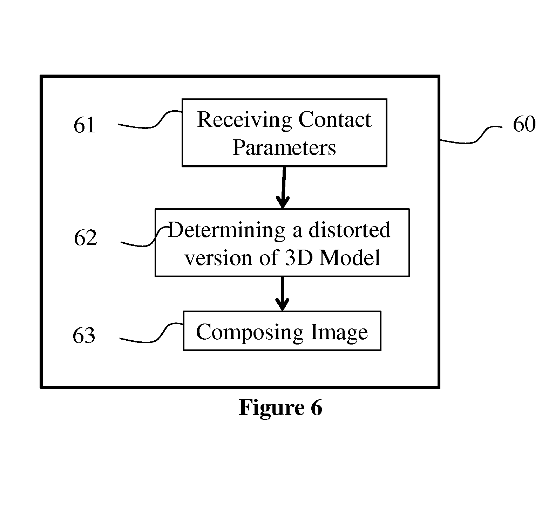

**Figure 6** diagrammatically shows an embodiment of a method (60) as implemented in a processing device such as the device (50) according to a non-restrictive advantageous embodiment. The method takes two set of data in entry: a 3D model (40, 541) representative of the shape of the surface of the textured material and a 3D distortion behaviour model (542).

In an initialization step (not represented on figure 6), the device (50) obtains the texture image and data representative of the 3D model and of the distortion behaviour model of the material. It should also be noted that a step of obtaining an information in the present document can be viewed either as a step of reading such an information in a memory unit of an electronic device or as a step of receiving such an information from another electronic device via communication means. Obtained information are stored in registers (541, 542) of the random access memory (54) of the device (50).

A first step (61) consists in receiving parameters of a contact. In a first embodiment, the contact is detected on and by the touch surface. The data representative of the contact comprise parameters such as the touch area, the duration of the contact, the direction and the speed of the touch displacement and the pressure over the touch area. All these parameters are detected by the touch surface. In a second embodiment, the touch surface detects only a part of the parameters and the other ones are computed. For example, if the touch surface does not detect the pressure over the touch area, a pressure parameter is computed in function of the duration of the contact. In another embodiment, the device (50) is not equipped with a touch surface and the contact is, for example, a mouse click on the texture image. The device (50) is equipped with a receiver to receive the contact parameters from an external component. Every parameters are computed to simulate a real touch contact. When a change is detected in at least one parameter, the step (62) is executed. If no change is detected, the image does not need to be refreshed and the step (63) is not executed. According to a variant, the image is composed at a constant frequency and the step (62) is executed if every cases.

At step (62), a distorted version of the 3D model is computed according to the 3D distortion behaviour model using the parameters of the contact detected at step (61). According to a particular embodiment, the surface of the textured material is mainly disposed on the plane (x,y). A vertical distortion is computed using a system of equations like {[E1], [E2]} for every points of the touch area and for the surrounding area. Advantageously, the 3D distortion behaviour model is based on the viscoelasticity properties of the material. It requires a system of equation that takes a derivative function of the time into account like in equations [E3] and E[4]. Such a 3D distortion model has the advantage to realistically distort the model when the user is rubbing the touch surface as the 3D model does not retrieve its initial shape instantly but progressively. According to another embodiment, the 3D distortion behaviour model applies distortion with components on horizontal axis in addition to the vertical axis. When a change is operated on the 3D scene (i.e. a distortion of the 3D model or a change in the position or the orientation of the virtual camera (41) or one of the virtual light sources (42)), the step (63) is executed. If no change is detected, the image does not need to be refreshed and the step (63) is not executed. According to a variant, the image is composed at a constant frequency and the step (63) is executed if every cases.

At step (63) an image representative of the distorted version of the 3D model is composed (i.e. generated) as seen from the virtual camera (41) and lighted with the virtual light sources (42).

Naturally, the present disclosure is not limited to the embodiments previously described.

In particular, the present disclosure is not limited to a method of composing an image representative of a textured material distorted by a contact but also extends to any method of displaying the composed and to any device implementing this displaying method. The implementation of calculations necessary to compose said image is not limited either to an implementation in shader type microprograms but also extends to an implementation in any program type, for example programs that can be executed by a CPU type microprocessor. The use of the methods of the present disclosure is not limited to a live utilisation but also extends to any other utilisation, for example for processing known as postproduction processing in a recording studio.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, smartphones, tablets, computers, mobile phones, portable/personal digital assistants ("PDAs"), and other devices.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method (60) of composing an image (10, 5210) representative of a texture, **characterized in that** the method comprises:

   - Obtaining a 3D model (40, 541) and a distortion behaviour model (542) of a material associated with said texture,
   - Receiving (61) parameters representative of a contact (11, 21, 543) between at least one object and the touch surface,
   - Determining (62) a distorted version of the 3D model (40, 541) following the distortion behaviour model (542) according to at least one parameter of said contact,
   - Composing (63) said image according to the distorted version of the 3D model (40, 5210).

2. The method according to claim 1, wherein said parameters of the contact comprise a duration value, said duration value being used to compute a pressure value for the contact, and wherein the longer the contact, the higher the pressure.

3. The method according to claims 1 or 2, wherein the distortion behaviour model (542) is based on a viscoelasticity model of the material (31).

4. The method according to one of claims 1 to 3, wherein said parameters of the contact comprise information representative of a touch area (11, 21) and wherein the distortion behaviour model takes said touch area information into account to compute the distorted version of the 3D model of the material (31, 32, 40).

5. The method according to claim 4, wherein a parameter of pressure varies over the touch area.

6. The method according to one of claims 1 to 5, wherein a position and an orientation of a virtual camera (41) and of at least one light (42) used for composing the image vary.

7. The method according to one of the claims 1 to 6, wherein the touch surface (55) is a touch screen, the method further comprising displaying the composed image on the touch screen.

8. An apparatus (50) configured for composing an image (10, 5210) representative of a texture, **characterized in that** the device comprises:

   - Means for obtaining a 3D model (541) and a distortion behaviour model (542) of a material associated with said texture,
   - Means for receiving (61) parameters representative of a contact (11,21, 543) of at least one object on the touch surface (55),
   - Means for determining a distorted version (62) of the 3D model (40) following the distortion behaviour model (542) according to at least one parameter of said contact,
   - Means for composing (63) said image according to the distorted version of the 3D model (10, 5210).

9. The apparatus according to claim 8, further comprising means for measuring a duration of said contact, said duration being used to compute a pressure value for the contact, the longer the contact, the higher the pressure.

10. The device according to claims 8 or 9, wherein the distortion behaviour model (542) is based on a viscoelasticity model of the material (31).

11. The device according to one of claims 8 to 10, wherein the said parameters of the contact comprise information representative of a touch area (11, 21) and wherein the distortion behaviour model takes said touch area information into account to distort the 3D model of the material (31, 32).

12. The device according to claim 5, wherein a parameter of pressure varies over the touch area.

13. The device according to one of claims 8 to 12, wherein a position and an orientation of a virtual camera (41) and of at least one light (42) used for composing the image varies over the time.

14. The device according to one of the claims 8 to 13, wherein the touch surface (11, 21) is a touch screen, the device further comprising means for transmitting the composed image to the touch screen.

15. A computer program product downloadable from a communication network and/or recorded on a medium readable by computer and/or executable by a processor, comprising program code instructions for implementing the steps of the method for composing an image representative of a texture according to one of the claims 1 to 7 when it is executed by a processor.

**Figure 1**

20

21

**Figure 2**

30

31

32

**Figure 3**

41

42

40

**Figure 4**

51

CPU

52

Graphic board

520

GPUs

GRAM — 521

Distorted image

— 5210

56

53

ROM

Prog — 530

Touch surface — 55

57

Power supply

54

RAM

Prog — 540

3D model — 541

Distortion behaviour model — 542

Contact parameters — 543

50

58

Display

**Figure 5**

61 — Receiving Contact Parameters

60

62 — Determining a distorted version of 3D Model

63 — Composing Image

**Figure 6**

Europäisches
Patentamt

European
Patent Office

Office européen
des brevets

**EUROPEAN SEARCH REPORT**

Application Number

EP 15 30 6405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2009/315839 A1 (WILSON ANDREW DAVID [US] ET AL) 24 December 2009 (2009-12-24)<br>* paragraphs [0003], [0004], [0006], [0007], [0025], [0031] - [0033], [0035], [0037] - [0039], [0042], [0045] - [0046] *<br>* paragraphs [0050] - [0052], [0055], [0077] - [0079], [0085] - [0086] *<br>* claims 2,3 *<br>----- | 1,3-8, 10-15<br><br>2,4,9,11 | INV.<br>A63F13/426<br>A63F13/2145<br>A63F13/218<br>A63F13/57<br>G06T19/20 |
| X<br><br>Y | US 2011/246916 A1 (LESKELAE JYRKI VEIKKO [FI] ET AL) 6 October 2011 (2011-10-06)<br>* paragraphs [0041], [0042], [0045], [0052], [0054], [0055], [0058] *<br>* claim 2 *<br>----- | 1,3,5-8, 10,12-15<br><br>2-4,9-11 | |
| Y | US 2014/208248 A1 (DAVIDSON PHILIP L [US]) 24 July 2014 (2014-07-24)<br>* paragraphs [0207], [0208] *<br>----- | 2,4,9,11 | |
| Y | US 2015/160779 A1 (HUANG JERRY [CN] ET AL) 11 June 2015 (2015-06-11)<br>* paragraphs [0112], [0125] - [0126] *<br>----- | 4,11 | TECHNICAL FIELDS SEARCHED (IPC)<br>A63F<br>G06F |
| Y | US 2015/057982 A1 (ERDMAN ARTHUR G [US] ET AL) 26 February 2015 (2015-02-26)<br>* the whole document *<br>----- | 3,10 | |

The present search report has been drawn up for all claims

| Place of search | Date of completion of the search | Examiner |
|---|---|---|
| Munich | 24 February 2016 | Ruf, Andreas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 30 6405

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2016

| Patent document cited in search report | | Publication date | Patent family member(s) | | Publication date |
|---|---|---|---|---|---|
| US 2009315839 | A1 | 24-12-2009 | CN | 102132253 A | 20-07-2011 |
| | | | EP | 2313826 A2 | 27-04-2011 |
| | | | US | 2009315839 A1 | 24-12-2009 |
| | | | US | 2012162117 A1 | 28-06-2012 |
| | | | WO | 2010008680 A2 | 21-01-2010 |
| US 2011246916 | A1 | 06-10-2011 | CN | 102822790 A | 12-12-2012 |
| | | | EP | 2553560 A1 | 06-02-2013 |
| | | | KR | 20130029071 A | 21-03-2013 |
| | | | TW | 201203046 A | 16-01-2012 |
| | | | US | 2011246916 A1 | 06-10-2011 |
| | | | WO | 2011121171 A1 | 06-10-2011 |
| US 2014208248 | A1 | 24-07-2014 | US | 8209628 B1 | 26-06-2012 |
| | | | US | 8745514 B1 | 03-06-2014 |
| | | | US | 2014208248 A1 | 24-07-2014 |
| US 2015160779 | A1 | 11-06-2015 | US | 2015160779 A1 | 11-06-2015 |
| | | | WO | 2015088883 A1 | 18-06-2015 |
| US 2015057982 | A1 | 26-02-2015 | US | 2015057982 A1 | 26-02-2015 |
| | | | WO | 2013148369 A1 | 03-10-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PETER SERGEANT ; FRÉDÉRIC GIRAUD ; BETTY LEMAIRE-SEMAIL.** *Geometrical optimization of an ultrasonic tactile plate for surface texture rendering,* 2010

- **ANATOLE LÉCUYER.** *Simulating haptic feedback using vision: A survey of research and applications of pseudo-haptic feedback,* 2009